(19) Europäisches Patentamt / European Patent Office / Office européen des brevets

(11) **EP 2 901 617 B1**

(12) **FASCICULE DE BREVET EUROPEEN**

(45) Date de publication et mention
de la délivrance du brevet:
**16.11.2016 Bulletin 2016/46**

(21) Numéro de dépôt: **13782749.9**

(22) Date de dépôt: **24.09.2013**

(51) Int Cl.:
***H04L 12/12*** *(2006.01)*     ***H04W 74/08*** *(2009.01)*

(86) Numéro de dépôt international:
**PCT/FR2013/052236**

(87) Numéro de publication internationale:
**WO 2014/049258 (03.04.2014 Gazette 2014/14)**

(54) **PROCEDE DE COMMUNICATION, PROCEDE DE GESTION DE COMMUNICATION, DISPOSITIFS ET NOEUDS ASSOCIES**

KOMMUNIKATIONSVERFAHREN, KOMMUNIKATIONSVERWALTUNGSVERFAHREN, ZUGEHÖRIGE KNOTEN UND VORRICHTUNGEN

COMMUNICATION METHOD, COMMUNICATION MANAGEMENT METHOD, ASSOCIATED NODES AND DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2012 FR 1259195**

(43) Date de publication de la demande:
**05.08.2015 Bulletin 2015/32**

(73) Titulaire: **Orange
75015 Paris (FR)**

(72) Inventeurs:
- **LAMPIN, Quentin
38000 Grenoble (FR)**
- **BARTHEL, Dominique
F-38190 Bernin (FR)**
- **AUGE-BLUM, Isabelle
69003 Lyon (FR)**
- **VALOIS, Fabrice
F-69003 Lyon (FR)**

(56) Documents cités:
**WO-A1-2011/022577     WO-A1-2012/001266**

- **FUJIWARA A ET AL: "CENTRALIZED CHANNEL ALLOCATION TECHNIQUE TO ALLEVIATE EXPOSED TERMINAL PROBLEM IN CSMA/CA-BASED MESH NETWORKS -SOLUTION EMPLOYING CHROMATIC GRAPH APPROACH-", IEICE TRANSACTIONS ON COMMUNICATIONS, COMMUNICATIONS SOCIETY, TOKYO, JP, vol. E88-B, no. 3, 1 mars 2005 (2005-03-01), pages 958-964, XP001225572, ISSN: 0916-8516, DOI: 10.1093/IETCOM/E88-B.3.958**
- **KYLE JAMIESON ET AL: "Sift: A MAC Protocol for Event-Driven Wireless Sensor Networks", 1 janvier 2006 (2006-01-01), WIRELESS SENSOR NETWORKS LECTURE NOTES IN COMPUTER SCIENCE;;LNCS, SPRINGER, BERLIN, DE, PAGE(S) 260 - 275, XP019027949, ISBN: 978-3-540-32158-3 le document en entier**

EP 2 901 617 B1

**EP 2 901 617 B1**

**Description**

**1. Domaine de l'invention**

Le domaine de l'invention est celui des télécommunications. Elle concerne plus particulièrement un protocole d'accès à un canal ou medium de communication par un ou plusieurs noeuds d'un réseau de communications.

Dans un réseau de télécommunications dans lequel plusieurs noeuds partagent un même médium de communication, des émissions simultanées peuvent interférer, causant des collisions et des pertes de paquets. C'est notamment le cas dans les réseaux sans fil comme les réseaux maillés sans fil, les réseaux locaux WiFi ou les réseaux basses puissances (LLN pour « *Lossy and Low power Network »).*

De nombreux protocoles d'accès au médium (protocoles MAC pour « *Media Access Control* ») ont été conçus pour faire face à ce problème. En particulier, la famille de protocoles IEEE-802.11 concerne les réseaux locaux WiFi et famille de protocoles IEEE-802.15.4 concerne les réseaux personnels sans fil.

Le développement de réseaux de capteurs sans fil a introduit une nouvelle contrainte dans la conception d'un protocole MAC, à savoir l'efficacité en termes de consommation énergétique. Ainsi, des protocoles MAC dit « Ecoute à faible consommation d'énergie » (LPL pour « *Low Power Listening »)* ont été conçus. Dans ce type de protocole, les noeuds sont endormis pendant de longues périodes, et une paire de noeuds émetteur/récepteur peut être sélectionnée pour communiquer pendant une période d'éveil. On peut classer les mécanismes d'évitement des collisions proposés par ces protocoles dans deux catégories : Mécanismes déterministes et mécanismes probabilistes.

Les mécanismes déterministes se basent sur un planning préétabli dans lequel chaque canal logique est dédié à un noeud spécifique. Ces mécanismes s'adaptent mal à un trafic imprévisible ou nécessitant de revoir le planning fréquemment, car cela conduit à une dépense d'énergie importante. De plus, l'extensibilité n'est pas bien assurée car un noeud particulier ne peut utiliser que le canal qui lui est attribué.

Les mécanismes probabilistes sont principalement basés sur un mécanisme d'écoute de la porteuse (CSMA pour « *Carrier Sens Multiple Access* »). En particulier, plusieurs protocoles utilisent une connaissance partagée du temps par les noeuds pour déterminer, pendant une fenêtre de contention fixe, le noeud qui pourra émettre pendant la période d'éveil suivante.

L'invention concerne plus particulièrement les mécanismes probabilistes.

**2. Art antérieur**

Il est connu de la demande de brevet internationale WO 2012001266 un procédé de communication selon lequel un noeud qui souhaite émettre des données pendant la prochaine période de transmission, sélectionne un intervalle de temps j dans une fenêtre de contention précédant cette période de transmission, écoute les intervalles de temps précédant l'intervalle j sélectionné, compte le nombre d'émissions pendant ces intervalles. Lorsque le nombre d'émission est inférieur ou égal à un seuil prédéterminé, il émet pendant l'intervalle de temps j et détermine un des canaux de transmission de la période de transmissions en fonction du nombre d'émissions qu'il a compté. Lorsqu'au contraire, le nombre d'émissions qu'il a compté est supérieur au seuil prédéterminé, il reporte sa transmission de données à une prochaine période de transmission.

Ce procédé permet donc à chaque noeud de planifier localement ses transmissions dans le temps.

**3. Inconvénients de l'art antérieur**

Un tel procédé est bien adapté à un réseau de capteurs de petite taille, dans lequel chaque capteur est en situation d'écouter tous les autres capteurs.

En revanche, il ne s'applique pas à un réseau de noeuds capteurs qui ne sont pas à portée radio les uns des autres, notamment parce qu'ils sont placés dans des zones, où les signaux radio sont fortement affaiblis. Il s'agit par exemple de capteurs enfermés sous une chape de béton. Il peut s'agir également d'un réseau de grande taille dans lequel les capteurs sont trop éloignés les uns des autres.

Lorsque les noeuds capteurs ne sont pas à portée radio les uns des autres, il est connu de recourir à un réseau de capteurs présentant une architecture centralisée, par exemple avec une topologie en étoile, selon laquelle un noeud concentrateur pourvu de capacités énergétiques suffisantes et de moyens d'émission/réception adaptés est chargé de collecter les mesures remontées par la pluralité de capteurs. Un tel noeud concentrateur couvre alors une large zone géographique, par exemple à l'échelle d'une petite ville ou d'un quartier d'une grande ville.

Dans un tel réseau, du fait que les communications capteur-capteur ne sont pas assurées, le procédé de communication qui vient d'être décrit. ne peut donc pas être mis en oeuvre de façon fiable.

Par ailleurs, du fait que les capteurs transmettent tous leurs données vers un même noeud concentrateur, le risque de collisions est élevé.

Enfin, il existe des applications telles que par exemple, celles destinées à la gestion d'un parc de stationnement, qui nécessitent une signalisation en temps restreint des informations collectées (par exemple, une place de parking qui vient de se libérer). Il est donc souhaitable que les capteurs accèdent sans délai au canal de communication.

## 4. Objectifs de l'invention

Il existe donc un besoin d'un procédé de communication permettant à un noeud capteur d'un réseau présentant une architecture centralisée et comprenant un noeud concentrateur apte à communiquer avec une pluralité de noeuds capteurs, d'obtenir l'accès au medium de communication lorsqu'il souhaite transmettre des données au noeud concentrateur.

Un autre besoin est de proposer un procédé de communication qui permette de limiter le risque de collisions entre plusieurs transmissions concurrentes.

Encore un autre besoin est de garantir pour un noeud l'accès au medium dans un délai compatible avec l'application visée.

## 5. Exposé de l'invention

L'invention vient améliorer la situation à l'aide d'un procédé de communication exécuté par un noeud capteur d'un réseau de télécommunications comprenant une pluralité de noeuds capteurs et un noeud concentrateur, ledit noeud capteur étant apte à transmettre des données au noeud concentrateur sur un médium de communication à diffusion qu'il partage avec la pluralité de noeuds capteurs.

Selon l'invention, le procédé comprend les étapes suivantes, destinées à être mises en oeuvre lorsque le noeud capteur a des données à transmettre au noeud concentrateur :

- sélection d'un intervalle de temps j dans une fenêtre de contention comprenant plusieurs intervalles de temps et précédant une période de transmission comprenant une pluralité d'intervalles de transmission ;
- diffusion d'un signal de requête dans l'intervalle de temps j sélectionné;
- réception d'un signal de réponse comprenant une information codée représentative d'une combinaison ordonnée des intervalles de la fenêtre de contention marqués comme des intervalles pendant lesquels au moins un signal a été reçu par le noeud concentrateur;
- détermination d'un rang de transmission, au moins en fonction d'un nombre d'intervalles marqués par le noeud concentrateur parmi les intervalles de temps précédant l'intervalle de temps j à partir de l'information codée reçue ;
- décision d'émettre les données dans la période de transmission, lorsque le rang de transmission déterminé est inférieur ou égal au nombre d'intervalles de ladite période.

Selon l'invention, un noeud capteur qui a des données à transmettre au noeud concentrateur du réseau sur un canal de communication partagé avec la pluralité de noeuds capteurs, participe à une compétition dans une fenêtre de contention précédant la prochaine période de transmission.. Il sélectionne un intervalle de temps j dans cette fenêtre et marque l'intervalle de temps qu'il a sélectionné en émettant un signal de requête dans cet intervalle de temps à destination du noeud concentrateur.

A l'issue de la fenêtre de contention, il reçoit, ainsi que tous les autres noeuds, en provenance du noeud concentrateur, un signal de réponse porteur d'une information codée représentative d'une combinaison ordonnée des intervalles de temps de la fenêtre de contention pour lesquels le noeud concentrateur a reçu un signal de requête de transmission de la part d'un ou plusieurs noeuds capteurs.

A partir de cette information codée, le noeud capteur déduit son rang de transmission.

Lorsque ce rang est inférieur à au nombre d'intervalles de la période de transmission, il décide d'émettre dans la période de transmission, par exemple dans l'intervalle de transmission correspondant à ce rang.

Lorsque ce rang est supérieur ou égal au nombre d'intervalles, il décide de reporter sa transmission à une prochaine période de transmission.

Ainsi, l'invention repose sur une approche tout à fait nouvelle et inventive de l'accès de noeuds capteurs à un canal de communication, dans une architecture centralisée, selon laquelle un noeud capteur en compétition, obtient d'un unique signal de réponse commun diffusé à tous les noeuds capteurs participant, le rang de transmission qui lui revient.

L'invention permet ainsi de résoudre le problème technique de l'absence de communication entre les différents noeuds capteurs, en conservant les avantages d'une compétition entre les noeuds qui souhaitent transmettre des données tout en minimisant le coût de la signalisation échangée entre le noeud concentrateur et la pluralité de noeuds capteurs.Selon un aspect de l'invention, l'étape de détermination comprend une sous-étape de décomposition de l'information codée reçue en K composantes d'un vecteur d'une base orthogonale M-aire, avec M entier supérieur ou égal à 2, de dimension K, avec K entier non nul, égale au nombre d'intervalles de la fenêtre de contention et une sous-étape d'interprétation des K composantes obtenues, selon laquelle le $k^{ième}$ intervalle est interprété comme marqué, lorsque la $k^{ième}$ composante a une valeur supérieure à zéro.

Un avantage est que l'information codée est un simple nombre, décomposable de façon unique, à partir duquel le noeud capteur peut obtenir, le nombre et les rangs des intervalles de la fenêtre de contention qui ont été marqués par le noeud concentrateur. Le signal de réponse émis par le noeud concentrateur est ainsi très peu coûteux à transmettre.

Selon un aspect de l'invention, si M a une valeur égale à 2, l'intervalle est interprété comme marqué, lorsque la $k^{ième}$ composante a une valeur égale à 1.

Un avantage est que l'information codée est très simple à décomposer. Le noeud capteur détermine très facilement s'il peut transmettre dans la période de transmission à venir ou s'il doit reporter sa transmission à la période suivante.

Selon un aspect de l'invention, si M a une valeur strictement supérieure à deux, le signal de requête diffusé par le noeud capteur est porté par une $m^{ième}$ forme d'onde parmi M formes d'ondes prédéterminées et en ce que le rang de transmission est en outre déterminé en fonction d'un nombre de formes d'ondes reçues sur un intervalle de temps donné.

Un avantage est que le noeud capteur obtient en plus une information sur le nombre de noeuds capteurs qui ont marqué le même intervalle que lui. Il peut notamment en déduire son rang réel et éviter les collisions susceptibles d'être occasionnées par l'utilisation du même intervalle de transmission par plusieurs noeud capteurs.

Avantageusement, le noeud capteur sélectionne de façon aléatoire la forme d'onde prédéterminée qui va porter son message de requête parmi une pluralité de M formes d'ondes prédéterminées.

Selon un aspect de l'invention, le procédé comprend une étape préalable de réception d'un signal d'annonce de fenêtre de contention en provenance du noeud concentrateur.

Un avantage d'une telle synchronisation à la volée est que les noeuds capteurs n'ont pas besoin de partager la connaissance du temps de façon préétablie.

L'invention concerne aussi un procédé de gestion de communication dans un réseau comprenant un noeud concentrateur et une pluralité de noeuds capteurs, la pluralité de noeuds capteurs étant apte à transmettre des données au noeud concentrateur sur un médium de communication à diffusion qu'ils partagent, ledit procédé étant exécuté par le noeud concentrateur.

Selon l'invention, le procédé de gestion comprend les étapes suivantes :

- écoute du médium de communication en vue de détecter au moins un signal reçu dans une fenêtre de contention comprenant plusieurs intervalles;
- marquage des intervalles de temps de la fenêtre de contention dans lesquels au moins un signal reçu a été détecté ;
- à l'issue de la fenêtre de contention, codage d'une information représentative d'une combinaison ordonnée des intervalles marqués ;
- Diffusion d'un signal de réponse comprenant ladite information codée.

Un tel procédé est avantageusement mis en oeuvre par le noeud concentrateur, apte à écouter la pluralité de noeuds capteurs du réseau de communication.

Selon un aspect de l'invention, l'information codée est obtenue par combinaison de composantes d'une base orthogonale M-aire de dimension K égale au nombre d'intervalles de la fenêtre de contention, la $k^{ième}$ composante étant mise à une valeur supérieure ou égale à 1, lorsque le $k^{ième}$ intervalle est marqué et à zéro sinon.

Un avantage est que l'information codée est diffusée aux noeuds une fois par compétition et qu'elle permet aux noeuds de déterminer chacun leur rang de transmission.

Selon un aspect de l'invention, lorsque M a une valeur égale à 2, la $k^{ième}$ composante est mise à la valeur à 1, lorsque le $k^{ième}$ intervalle est marqué et à zéro sinon.

L'avantage d'une base de décomposition orthogonale M-aire est qu'elle permet de coder dans un simple nombre toutes les informations nécessaires à chaque noeud capteur pour déterminer son rang de transmission.

Selon un autre aspect de l'invention, lorsque M a une valeur strictement supérieure à 2, l'étape d'écoute comprend la détection d'au moins un signal porté par une $m^{ième}$ forme d'onde parmi une pluralité de M formes d'ondes prédéterminées et, dans l'étape de codage de l'information, la valeur de la $k^{ième}$ composante est obtenue par combinaison ordonnée de M sous-composantes d'une base orthogonale, la $m^{ième}$ sous-composante étant égale à 1, lorsque la $m^{ième}$ forme d'onde a été détectée.

Dans ce cas, le noeud concentrateur, lorsqu'il détecte les signaux reçus, est capable de distinguer leurs différentes formes d'ondes. La base M-aire, avec M>2 lui permet d'ajouter, dans l'information codée, une information relative aux formes d'onde détectées sur chaque intervalle de la fenêtre de contention.

L'invention concerne aussi un dispositif de communication par un noeud capteur d'un réseau de télécommunications comprenant une pluralité de noeuds capteurs et un noeud concentrateur, ledit noeud capteur étant apte à transmettre des données au noeud concentrateur sur un médium de communication à diffusion qu'il partage avec la pluralité de noeuds capteurs.

Selon l'invention, le dispositif est apte à mettre en oeuvre les unités suivantes, lorsque le noeud capteur a des données à transmettre au noeud concentrateur :

- sélection d'un intervalle de temps j dans une fenêtre de contention comprenant plusieurs intervalles de temps et précédant une période de transmission comprenant une pluralité d'intervalles de transmission ;
- diffusion d'un signal de requête dans l'intervalle de temps j sélectionné;
- réception d'un signal de réponse comprenant une information codée représentative d'une combinaison ordonnée des intervalles de la fenêtre de contention marqués comme des intervalles pendant lesquels au moins un signal a été reçu par le noeud concentrateur ;
- détermination d'un rang de transmission au moins en fonction d'un nombre d'intervalles marqués par le noeud concentrateur parmi les intervalles de temps précédant l'intervalle de temps j à partir de l'information codée reçue ;
- décision d'émettre les données dans la période de transmission, lorsque le rang de transmission déterminé est inférieur ou égal au nombre d'intervalles de la période de transmission.

Un tel dispositif est apte à mettre en oeuvre le procédé de communication selon l'invention, qui vient d'être décrit selon ses différents aspects.

Avantageusement ce dispositif peut être intégré à un noeud capteur.

L'invention concerne donc en outre un noeud capteur apte à mettre en oeuvre le dispositif de communication qui vient d'être décrit.

L'invention concerne aussi un dispositif de gestion de communication dans un réseau comprenant un noeud concentrateur et une pluralité de noeuds capteurs, la pluralité de noeuds capteurs étant apte à transmettre des données au noeud concentrateur sur un médium de communication à diffusion qu'ils partagent, ledit dispositif étant apte à mettre en oeuvre les unités suivantes :

- écoute du médium de communication en vue de détecter au moins un signal reçu dans une fenêtre de contention comprenant plusieurs intervalles;
- marquage des intervalles de temps de la fenêtre de contention dans lesquels au moins un signal reçu a été détecté ;
- à l'issue de la fenêtre de contention, codage d'une information représentative d'une combinaison ordonnée des intervalles marqués ;
- Diffusion d'un signal de réponse, comprenant ladite information codée.

Un tel dispositif est apte à mettre en oeuvre le procédé de gestion selon l'invention, qui vient d'être décrit selon ses différents aspects.

Avantageusement ce dispositif peut être intégré à un noeud concentrateur.

L'invention concerne donc en outre un noeud concentrateur apte à mettre en oeuvre le dispositif de gestion qui vient d'être décrit.

L'invention se rapporte aussi à un réseau de communication comprenant une pluralité de noeuds capteurs et un noeud concentrateur selon l'invention.

Les avantages et caractéristiques discutés en rapport au procédé de communication et au procédé de gestion s'appliquent de manière correspondante au noeud capteur, au noeud concentrateur et au réseau de communication considérés.

L'invention vise aussi un programme d'ordinateur comportant des instructions pour l'exécution des étapes du procédé de communication précité lorsque ledit programme est exécuté par un ordinateur.

L'invention vise également un programme d'ordinateur comportant des instructions pour l'exécution des étapes du procédé de gestion précité lorsque ledit programme est exécuté par un ordinateur.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus.

Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure 1 présente une vue schématique d'un réseau de communication selon un mode de réalisation de l'invention ;
- la figure 2 représente un exemple de déroulement d'une communication dans le réseau de la figure 1 selon un mode de réalisation de l'invention ;
- la figure 3 présente de façon schématique un diagramme d'étapes qui illustre le fonctionnement d'un noeud capteur ;
- la figure 4 présente de façon schématique un diagramme d'étapes qui illustre les étapes d'un procédé de communication selon un mode de réalisation de l'invention ;
- la figure 5 présente de façon schématique un diagramme d'étapes qui illustre les étapes d'un procédé de gestion selon un mode de réalisation de l'invention ;
- les figures 6 et 7 illustrent des exemples de construction de l'information codée respectivement selon un premier et un deuxième mode de réalisation de l'invention ;
- la figure 8 présente un exemple de structure d'un dispositif de communication selon un mode de réalisation de l'invention; et
- la figure 9 présente un exemple de structure d'un dispositif de gestion selon un mode de réalisation de l'invention.

## 7. Description d'un mode de réalisation particulier de l'invention

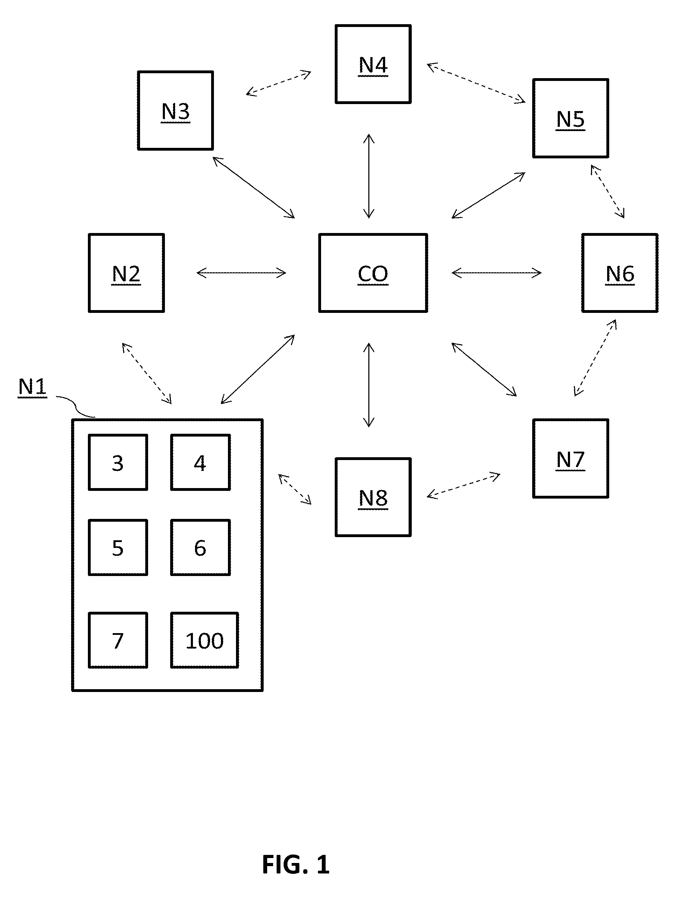

La figure 1 représente un réseau 2 comprenant plusieurs noeuds $N_1$, $N_2$, ...$N_N$. Le réseau 2 est par exemple un réseau sans fil de capteurs à basse consommation, dans lequel les noeuds, dits noeuds capteurs, peuvent commuter entre un état de sommeil dans lequel ils consomment peu d'énergie et un état éveillé dans lequel ils peuvent envoyer et recevoir des données, en particulier des données relatives à des valeurs mesurées par des capteurs. Toutefois, l'invention n'est pas limitée à ce type de réseau et peut notamment concerner un réseau de liens sur toute sorte de canal de communication partagé.

Chaque noeud Ni présente l'architecture matérielle d'un ordinateur. L'un des noeuds $N_1$ est représenté de manière plus détaillée sur la figure 1 et comprend un microprocesseur 3, une mémoire morte 4, une mémoire vive 5, une interface de communication 6 et un port d'entrée 7. Le microprocesseur 3 permet d'exécuter des programmes mémorisés dans la mémoire morte 4, en utilisant la mémoire vive 5. L'interface de communication 6 permet de communiquer par liaison sans fil avec les autres noeuds 1 du réseau 2. Enfin, le port d'entrée 7 permet d'acquérir la valeur d'un signal de mesure.

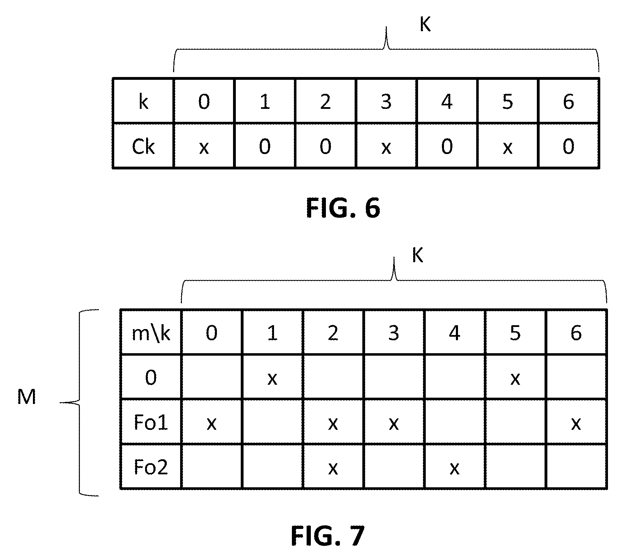

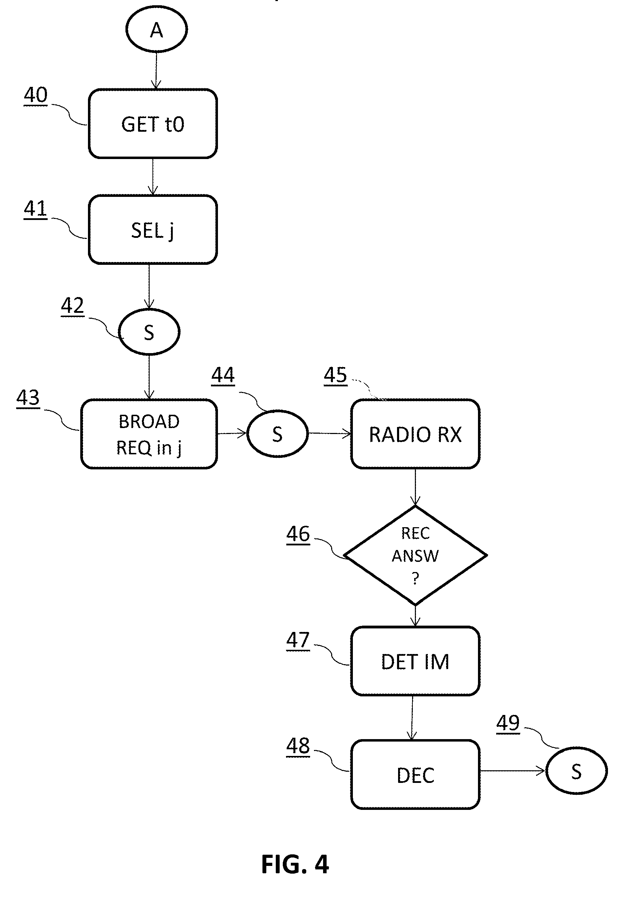

La mémoire morte 4 constitue un support d'information lisible par le microprocesseur 3. Selon un mode de réalisation de l'invention, elle comporte des instructions d'un programme d'ordinateur dont les principales étapes représentées sous forme d'organigrammes sur la Figure 4 permettent l'exécution d'un procédé de communication selon un premier mode de réalisation de l'invention, mis en oeuvre par le noeud Ni. Avantageusement, le noeud Ni comprend un dispositif 100 de communication selon un deuxième mode de réalisation de l'invention, qui sera décrit en relation avec la figure 6.

Périodiquement ou en fonction de la valeur du signal de mesure acquise sur son port d'entrée 7, chaque noeud Ni décide de transmettre des données sur le réseau 2. Pour éviter des collisions et pertes de paquets, chaque noeud Ni met en oeuvre un mécanisme d'évitement des collisions décrit plus en détail ci-après.

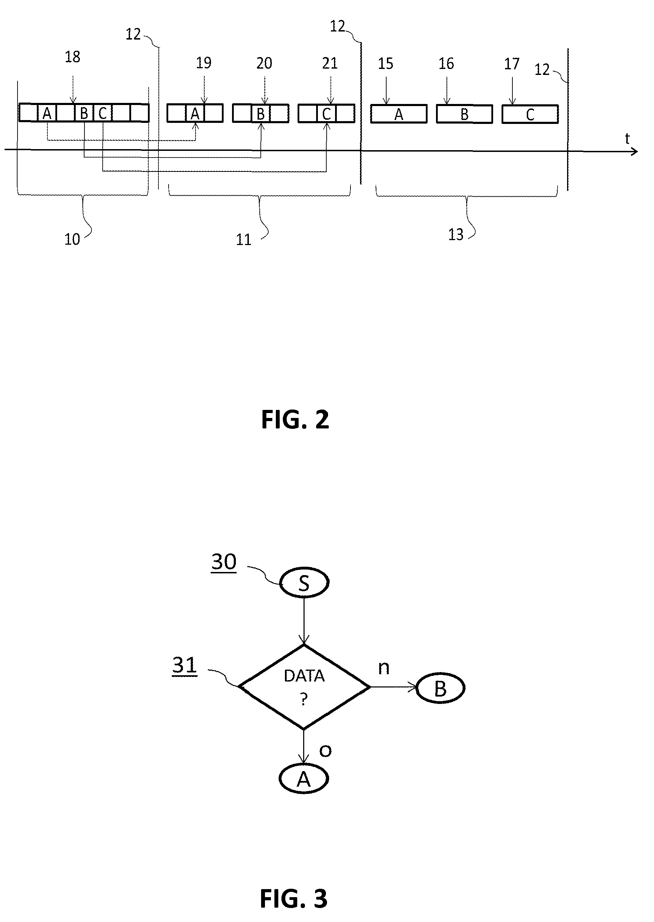

La **figure 2** représente, en fonction du temps, le déroulement d'une communication sur le réseau 2 pour un noeud capteur Ni du réseau de communication 2. Les noeuds Ni ont une connaissance partagée du temps t. Ainsi, ils peuvent commuter périodiquement dans leur état éveillé à des instants 12 communs à tous les noeuds $N_i$. Cette connaissance peut être préétablie ou acquise à la volée. Le déroulement de la communication comprend deux phases 10, 11 qui précèdent un instant 12 de commutation à l'état éveillé, et un phase 13 qui suit l'instant 12.

Les phases 10 et 11 ont pour but de déterminer les noeuds Ni qui vont être autorisés à émettre. Enfin, la phase 13 est une période de transmission pendant laquelle les noeuds Ni autorisés à émettre émettent les données à transmettre.

La période de transmission de la phase 13 présente plusieurs canaux de transmission. Dans l'exemple représenté sur la figure 2, la période de transmission comprend trois canaux de transmission 15, 16 et 17 multiplexés temporellement. En variante, la période de transmission pourrait comprendre plus ou moins de canaux de transmission. En variante également, les canaux de transmission pourraient être multiplexés en fréquence.

Les phases 10 et 11 permettent la mise en oeuvre d'un mécanisme d'évitement des collisions en deux parties, qui a pour but de sélectionner les trois noeuds Ni qui vont être autorisés à émettre respectivement dans les canaux de transmissions 15, 16 et 17. Bien entendu, si la période de transmission comprend plus ou moins de trois canaux de transmission, le nombre de noeuds Ni sélectionnés pendant les phases 10 et 11 est adapté en conséquence. L'invention concerne plus particulièrement le déroulement de la phase 10.

Les figures **3 et 4** sont des diagrammes d'étapes représentant le procédé de communication effectué par chaque noeud Ni, permettant le déroulement d'une communication selon la figure 2.

A l'étape 30 de la **figure 3,** qui précède la phase 10, le noeud Ni est dans son état de sommeil, ce qui est représenté par le symbole S sur les figures. A l'étape 31, le noeud Ni détermine s'il a des données à transmettre. Si le noeud Ni n'a pas de données à transmettre, il se rendort. S'il a des données à transmettre, il passe à l'étape 40 de la figure 4.

La **figure 4** représente les étapes effectuées par un noeud Ni qui a des données à transmettre, pendant la phase 10 de la figure 2, selon un premier mode de réalisation de l'invention. La phase 10 permet la mise en oeuvre d'une première partie du mécanisme d'évitement des collisions, en utilisant une fenêtre de contention 18 divisée en plusieurs intervalles de temps. Sur la figure **2,** la fenêtre de contention 18 est divisée en Tf intervalles de temps, avec Tf qui vaut 7. En variante, la fenêtre de contention 18 pourrait être divisée en plus ou moins d'intervalles de temps.

A l'étape 40, le noeud Ni obtient un instant to de début de la prochaine fenêtre de contention 18. Par exemple, il reçoit un signal d'annonce SA en provenance du noeud concentrateur CO. En 41, il sélectionne au hasard un intervalle de temps j dans la fenêtre de contention 18. La fonction de probabilité utilisée pour sélectionner l'intervalle de temps j peut être de différents types, par exemple une distribution croissante géométriquement, du type décrit dans le document K. Jamieson, H. Balakrishnan, et Y.C. Tay, « Sift : A MAC protocol for event-driven wireless sensor networks », dans EWSN (K.Römer, H. Karl, et F. Mattern, eds), vol. 3868 de Lecture Notes in Computer Science, pp. 260-275, Springer, 2006, ou simplement une distribution uniforme.

Ensuite, le noeud Ni s'endort en 42, jusqu'au début de l'intervalle j de la fenêtre de contention 18. Il se réveille au début de l'intervalle j et envoie en 43 un signal de requête de transmission au noeud concentrateur CO pour marquer l'intervalle j. Il se rendort en 44.

A la fin de la fenêtre de contention, le noeud Ni se réveille et écoute, au cours d'une étape 45, les éventuels messages reçus sur son interface de communication 6, ce qui est symbolisé par RADIO RX.

A l'étape 46, le noeud Ni détermine si l'un des messages reçus est un signal de réponse en provenance du noeud concentrateur CO, ce qui est symbolisé par « ANSW ? ».

S'il a reçu un message de réponse en provenance du noeud concentrateur CO, il extrait de ce message une information codée représentative d'une combinaison ordonnée des intervalles de la fenêtre de contention marqués comme des intervalles pendant lesquels des signaux ont été reçus par le noeud concentrateur de la pluralité de noeuds capteurs.

Le noeud capteur Ni est alors capable de déterminer le nombre d'intervalles qui ont été marqués avant l'intervalle j qu'il a sélectionné, et d'en déduire le rang de transmission Rg qui lui revient.

Lorsque le rang de transmission Rg obtenu a une valeur inférieure à un seuil prédéterminé T, le noeud Ni décide qu'il peut transmettre dans l'intervalle numéro IM +1 de la fenêtre de transmission. Le seuil T correspond au nombre de canaux de transmission dans la période de transmission. Ainsi, T = 3 dans l'exemple de la figure 2.

En 49, il se rendort et programme son réveil à l'instant de début de transmission de la phase 13 correspondant à son rang, c'est-à-dire un des créneaux 15, 16 ou 17.

Lorsqu'au contraire, le nombre d'intervalles marqués IM obtenu a une valeur supérieure ou égale au seuil T, le noeud Ni décide, au cours d'une étape 48 qu'il ne peut pas transmettre dans la période de transmission 19, et qu'il tentera sa chance lors de la prochaine compétition, par exemple pour l'attribution des intervalles de la période de transmission 20 ou 21. Il se rendort en 49.

Bien sûr, on comprend que l'information codée se limite dans ce premier mode de réalisation à indiquer le nombre et le rang des intervalles marqués par le noeud concentrateur, et qu'elle est silencieuse sur le nombre de noeuds qui ont tenté de marquer un même intervalle de la fenêtre de contention.

Il en résulte que plusieurs noeuds Ni peuvent prendre simultanément la décision d'émettre dans un même intervalle de temps j qu'ils ont sélectionné chacun de leur côté.

Pour éviter que cette situation se produise, les noeuds sélectionnés lors de la première phase du mécanisme d'évitement des collisions, peuvent participer à la deuxième partie de ce mécanisme. Il s'agit donc des noeuds Ni qui ont des données à transmettre et qui ont pu obtenir un rang de transmission inférieur au seuil T pendant la phase 10. Ainsi, chaque noeud Ni qui participe à cette deuxième partie, dispose d'un rang dont la valeur est comprise entre 1 et T.

Comme le représente la figure **2,** la deuxième partie du mécanisme d'évitement des collisions, correspondant à la phase 11, utilise T fenêtres de contention, c'est-à-dire trois fenêtres de contention 19, 20 et 21 dans l'exemple représenté. Le compteur c de chaque noeud 1 permet de lui assigner une des fenêtres de contention 19, 20 et 21 pour la deuxième partie du mécanisme d'évitement des collisions.

Ainsi, selon l'invention, un mécanisme de sélection est mis en oeuvre dans chaque fenêtre de contention 19, 20 et 21 permettant de sélectionner un unique noeud 1 autorisé à transmettre dans le canal de transmission 15, 16 ou 17 correspondant respectivement à la fenêtre de contention 19, 20 ou 21. Cette deuxième partie du mécanisme d'évitement des collisions est très utile car, pendant la première partie, plusieurs noeuds Ni peuvent avoir sélectionné un même intervalle de temps à l'étape 55 et donc s'être octroyé le même rang.

Ensuite, chacun des trois noeuds Ni autorisés à transmettre transmet ses données sur le canal de transmission 15, 16 et 17 correspondant à sa fenêtre de contention 19, 20 et 21. Ainsi, dans l'exemple représenté, le noeud ni qui a sélectionné l'intervalle de temps n° 2 pendant la phase 10 et participé au mécanisme de sélection de la fenêtre de contention 19 pendant la phase 11 transmet ses données dans le canal de transmission 15.

Le mécanisme d'évitement des collisions permet également de commuter chaque noeud entre son état de sommeil et son état éveillé, en fonction des besoins. Seuls le noeud Ni ayant des données à transmettre et le noeud concentrateur sont dans l'état éveillé pendant la transmission. Les autres noeuds consomment donc peu d'énergie.

Selon un deuxième mode de réalisation, qui sera présenté plus en détails en relation avec la Figure **7,** le noeud capteur Ni diffuse un signal de requête REQ en utilisant une forme d'onde prédéterminée parmi une pluralité de M formes d'ondes prédéterminées.

Selon ce mode de réalisation de l'invention, l'information codée qu'il reçoit est représentative de la réception par le noeud concentrateur d'au moins un type de forme d'onde parmi la pluralité de formes d'ondes prédéterminées. Si plusieurs types de formes d'ondes sont détectés par le noeud concentrateur, ce dernier insère cette information dans l'information codée IC et le noeud capteur Ni peut en tenir compte pour établir son rang de transmission. Par exemple, s'il a sélectionné la deuxième forme d'onde pour porter son message de requête et s'il détermine que la première forme d'onde a été détectée par le noeud concentrateur dans le même intervalle j que le sien, il doit décaler son rang de transmission de 1. Un avantage de ce mode de réalisation est qu'il permet de limiter encore plus le risque de collision dans un intervalle de transmission donné.

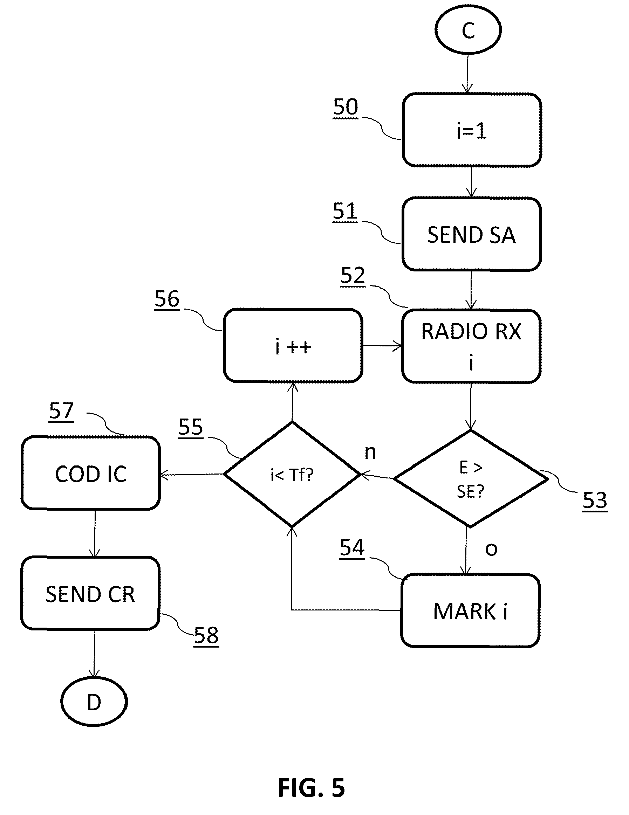

La figure **5** est un diagramme d'étapes représentant le procédé de gestion de communication exécuté par le noeud concentrateur CO selon un premier mode de réalisation de l'invention et permettant le déroulement d'une communication entre la pluralité de noeuds capteurs et le noeud concentrateur selon la figure **2.**

Au début de la fenêtre de contention, dans une étape 50, le noeud concentrateur initialise une variable i à 1. Cette variable correspond à l'intervalle de temps courant de la fenêtre de contention 18. Il initialise aussi à zéro un tableau de marquage à une dimension TM(i) de longueur Tf, égale au nombre d'intervalles de la fenêtre de contention 18. La variable i est donc un entier compris entre 1 et Tf.

Avantageusement, au cours d'une étape 51, il émet sur son interface radio, un message d'annonce de début t0 d'une prochaine fenêtre de contention 18, à destination de la pluralité de noeuds capteurs Ni.

Au cours d'une étape 52, qui dure le temps de l'intervalle courant i, le noeud concentrateur se met à l'écoute des signaux reçus sur son interface radio, ce qui est symbolisé par RADIO RX i sur la figure 5. Avantageusement, il détecte une quantité d'énergie E reçue pendant l'intervalle courant i et, si cette quantité d'énergie est supérieure à un seuil Se prédéterminé, il décide à l'issue de cet intervalle, en 53 qu'il a reçu un signal dans l'intervalle de temps i courant. En 53, il marque l'intervalle i concerné en mettant à 1 la variable TM(1) du tableau de marquage. Sinon, il la laisse à zéro.

Ensuite, dans tous les cas, il vérifie en 54 que la variable i est strictement inférieure au seuil Tf. Si c'est le cas, le noeud concentrateur CO incrémente de 1 la valeur de l'intervalle courant i au cours de l'étape 56, puis retourne à l'étape 52.

La succession d'étapes 52 à 56 est donc répétée pour chaque valeur de l'intervalle courant i, tant que i est strictement inférieure au nombre d'intervalles Tf.

Selon ce premier mode de réalisation de l'invention, le tableau de marquage est rempli de la façon suivante :

- Lorsque k est égal à K-1, le noeud concentrateur CO met en oeuvre une étape 57 de codage des informations du tableau de marquage sur une séquence binaire de longueur Tf, de la façon suivante : Le $k^{\text{ème}}$ bit est mis à 1 lorsque l'intervalle k a été marqué par le noeud concentrateur,
- Le $k^{\text{ème}}$ bit est mis à zéro sinon.

Cela revient à projeter les valeurs du tableau de marquage sur une base binaire orthogonale de dimension Tf.

Selon ce premier mode de réalisation de l'invention, dont un exemple est illustré par la Figure **6,** l'information est codée sur une base binaire de dimension K, égale au nombre d'intervalles de la fenêtre de contention. Le noeud Ni décompose donc l'information codée reçue en K composantes Ck d'un vecteur d'une base binaire de dimension K égale au nombre d'intervalles de la fenêtre de contention et interprète les composantes obtenues, la $k^{\text{ème}}$ composante étant égale à 1 lorsque l'intervalle a été marqué par le noeud concentrateur et à zéro sinon.

L'information codée IC est donc obtenue en faisant la somme des contributions des K composantes de la façon suivante : $IC = \sum_{k=0}^{K-1} C_k . 2^k$ avec $C_k$ = f, fonction indicatrice, par exemple égale à 1, lorsque l'intervalle k a été marqué et $C_k$ = 0 sinon.

Dans l'exemple de la Figure 5, les intervalles 0, 3 et 5 ont été marqués. L'information codée IC reçue par les noeuds capteurs vaut donc, en appliquant la formule précédente : IC = $1.2^0$+ $1.2^3$+$1.2^5$ =1 + 8 +32 = 41.

A partir de l'information codée, le noeud Ni pourra déterminer le nombre d'intervalles marqués par le noeud concentrateur CO et en déduire son rang de transmission. Ceci est rendu possible par le fait qu'une base orthogonale a été utilisée par le noeud concentrateur. L'information codée IC est donc re-décomposée sans perte d'information.

Selon un deuxième mode de réalisation de l'invention, le noeud concentrateur CO est apte à distinguer différentes formes d'onde FO parmi une pluralité de M formes d'ondes prédéterminées, reçues sur son interface radio.

En relation avec la figure **7,** un exemple illustratif de ce deuxième mode de réalisation de l'invention va maintenant être présenté.

Dans cet exemple, on considère une première et une deuxième formes d'ondes distinctes FO1 et FO2.

Au début de la fenêtre de contention, dans une étape 50, le noeud concentrateur initialise une variable k à 0. Cette variable correspond à l'intervalle de temps courant de la fenêtre de contention 18. Il initialise aussi à zéro un tableau de marquage à deux dimensions TM[k,m] avec k compris entre 0 et K-1, K étant égal au nombre d'intervalles de la fenêtre de contention 18 et m compris entre 0 et M-1, M-1 étant égal au nombre de formes d'ondes que le noeud concentrateur est apte à distinguer.

Avantageusement, au cours d'une étape 51, il émet sur son interface radio, un message d'annonce de début t0 d'une prochaine fenêtre de contention 18, à destination de la pluralité de noeuds capteurs Ni.

Au cours d'une étape 52, qui dure le temps de l'intervalle courant k, le noeud concentrateur se met à l'écoute des signaux reçus sur son interface radio, ce qui est symbolisé par RADIO RX i sur la figure 5. Avantageusement, s'il détecte un signal porté par la première forme d'onde FO1, il décide à l'issue de cet intervalle, en 53, de marquer l'intervalle k concerné en mettant à la valeur de fonction indicatrice, par exemple égale à 1, la variable TM(k,1) du tableau de marquage. Sinon, il la laisse à zéro.

S'il détecte en outre, pour ce même intervalle k, la réception d'un autre signal porté cette fois par la deuxième forme d'onde FO2, il marque la variable TM(k,2) à la valeur f.

Si, au contraire, aucun signal porté par la première ou la deuxième forme d'onde n'est détecté, il ne marque aucune case. On considèrera la valeur zéro de la case TM(k, 0) comme indicatrice de l'absence de signal détecté.

Ensuite, dans tous les cas, il vérifie en 54 que la variable k est strictement inférieure au seuil K-1. Si c'est le cas, le noeud concentrateur CO incrémente de 1 la valeur de l'intervalle courant k au cours de l'étape 56, puis retourne à l'étape 52.

La succession d'étapes 52 à 56 est donc répétée pour chaque valeur de l'intervalle courant k, tant que k est strictement inférieure au nombre d'intervalles K-1.

Selon ce deuxième mode de réalisation de l'invention, l'information codée IC est ensuite composée, comme illustré en relation avec la figure 7, de la façon suivante, par combinaison des composantes d'une base orthogonale M-aire, avec M entier strictement supérieur à deux: $IC = \sum_{k=0}^{K-1} I_k . M^k$ avec $I_k = \sum_{m=0}^{M-1} f . 2^m$ fonction indicatrice, par exemple égale à 1.

Chaque noeud apporte une contribution à une composante de l'information codée. Cette information codée combine tous les évènements de réception détectés par le noeud concentrateur. Du fait que les bases utilisées sont orthogonales, chaque noeud est en mesure de décomposer de façon unique cette information codée sur les deux bases imbriquées, afin d'obtenir sa contribution à l'information codée.

L'ordre de transmission des noeuds se déduit de la contribution obtenue à partir de l'information codée, en fonction des relations d'ordres établies respectivement entre les K composantes ($M^k$) correspondants aux intervalles de la fenêtre de contention et les M sous-composantes ($2^m$) correspondant aux formes d'ondes..

Dans ce mode de réalisation, ces relations d'ordre sont croissantes. En variante, elles peuvent être choisies décroissantes, l'important étant que les noeuds les connaissent au préalable.

Dans l'exemple de la figure **7,** on considère M égal 4. Deux formes d'ondes FO1, FO2 sont susceptibles d'être utilisées pour la transmission des noeuds capteurs vers le noeud concentrateur.

Le noeud concentrateur CO a détecté :

- La première forme d'onde FO1 dans l'intervalle 0,
- Aucune des deux formes d'ondes dans l'intervalle 1,
- La première et la deuxième formes d'onde FO1, FO2 dans l'intervalle 2,
- La première forme d'onde FO1 dans l'intervalle 3,
- La première et la deuxième formes d'onde FO1, FO2 dans l'intervalle 4,
- Aucune des deux formes d'ondes dans l'intervalle 5,

- La première forme d'onde FO1 dans l'intervalle 6.

Les composantes $I_k$ qui en résultent sont les suivantes :

$$I0 = f.4^0 \; ; \; I1 = 0 \; ; \; I2 = f.2^1 + f.2^2 \; ; \; L3 = f.2^1 \; ; L4 = f.2^1 + f.2^2 \; ; \; L5 = 0 \; ; L6 = f.2^1$$

L'information codée IC est ensuite calculée comme suit :

$$IC = 1.4^0 + 0.4^1 + (1+2).4^2 + 1.4^3 + 2.4^4 + 0.4^5 + 1.4^6 = 1 + 48 + 64 + 256 = 369$$

Le noeud capteur Ni détermine donc à partir de l'information codée IC reçue, non seulement le nombre d'intervalles marqués avant l'intervalle j qu'il a sélectionné, mais aussi le nombre de formes d'ondes marquées dans cet intervalle, avant la sienne. Il est donc en mesure de calculer plus précisément son rang de transmission.

Selon une variante du deuxième mode de réalisation qui vient d'être présenté, le noeud concentrateur ne détecte qu'une forme d'onde parmi les M prédéterminées. Ainsi, il ne marque qu'une forme d'onde par intervalle k de la fenêtre de contention. Seuls les noeuds capteurs qui ont sélectionné cette forme d'onde ont donc une chance de gagner lors de leur participation au mécanisme de compétition. Ceci permet de limiter le nombre de collisions sur un intervalle donné de la période de transmission.

Avantageusement, selon cette variante, un noeud capteur Ni qui souhaite transmettre des données au noeud concentrateur lors de la prochaine période de transmission, sélectionne de façon aléatoire, par exemple selon une loi de distribution croissante géométriquement, la forme d'onde qu'il va utiliser parmi les M prédéterminées.

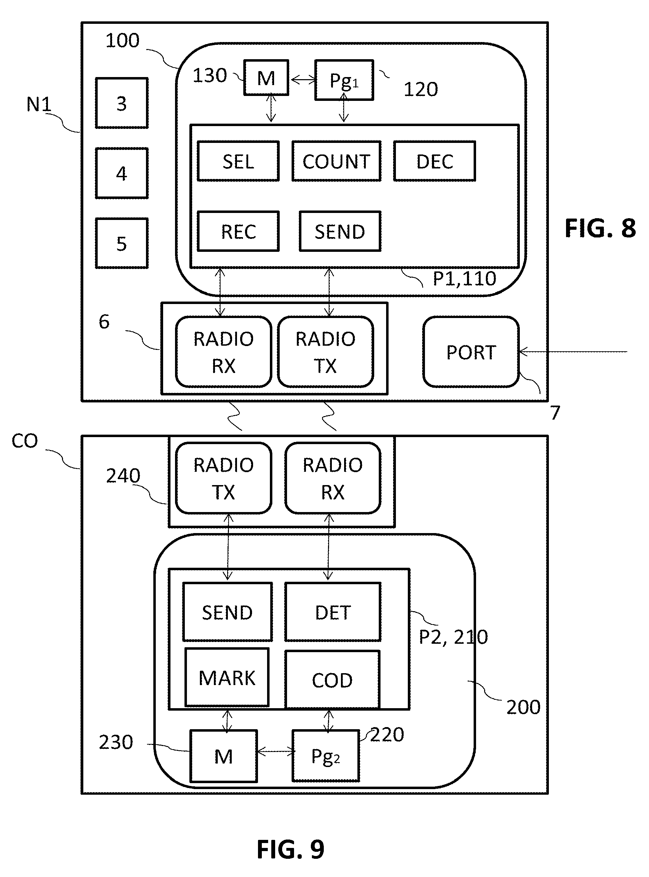

En relation avec les Figures **8** et **9,** on considère maintenant les structures simplifiées d'un dispositif 100 de communication et d'un dispositif 200 de gestion de communication selon un exemple de réalisation de l'invention. Le dispositif de communication 100 met en oeuvre le procédé de communication selon l'invention tel que décrit ci-dessus. Le dispositif de gestion met en oeuvre le procédé de gestion de communication selon l'invention tel que décrit ci-dessus.

Par exemple, le dispositif 100 comprend une unité de traitement 110, équipée par exemple d'un processeur P1, et pilotée par un programme d'ordinateur $Pg_1$ 120, stocké dans une mémoire 130 et mettant en oeuvre le procédé de communication selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en oeuvre les étapes du procédé de communication décrit précédemment, selon les instructions du programme d'ordinateur 120.

Le dispositif 100 comprend une unité SEL de sélection d'un intervalle de temps dans une fenêtre de contention comprenant plusieurs intervalles de temps et précédant une période de transmission comprenant une pluralité d'intervalles de transmission, une unité REQ d'émission d'un signal de requête dans l'intervalle de temps j sélectionné à destination du noeud concentrateur, une unité REC de réception d'un signal de réponse porteur d'une information codée représentative d'une combinaison ordonnée des intervalles de la fenêtre de contention marqués comme des intervalles pendant lesquels des signaux ont été reçus par le noeud concentrateur de la pluralité de noeuds capteurs, une unité DET de détermination d'un nombre d'intervalles marqués par le noeud concentrateur parmi les intervalles de temps précédant l'intervalle de temps j à l'aide du signal de réponse reçu, une unité DEC de décision d'émettre les données dans l'intervalle de temps j lorsque le nombre d'intervalles compté est inférieur à un seuil prédéterminé.

Selon l'invention, le dispositif 100 de communication est donc agencé pour coopérer avec un module d'émission/réception radio 6 du noeud Ni. En particulier l'unité REQ est apte à lui commander l'émission du signal de requête REQ dans l'intervalle de temps j sélectionné et l'unité REC est apte à requérir de ce module les signaux reçus pendant un intervalle de temps donné, comme par exemple un signal de réponse ANSW en provenance du noeud concentrateur CO. Ces unités sont pilotées par le processeur P1 de l'unité de traitement 110.

Avantageusement, le dispositif de communication 100 est intégré dans un noeud Ni. Selon une variante, il pourrait être intégré à un module indépendant, connecté au noeud Ni.

Selon une autre variante évoquée en relation avec la Figure 1, le programme d'ordinateur Pg1 est stocké dans la mémoire 4 et exécuté par le processeur 3 du noeud capteur Ni.

Par exemple, le dispositif 200 comprend une unité de traitement 210, équipée par exemple d'un processeur P2, et pilotée par un programme d'ordinateur $Pg_2$ 220, stocké dans une mémoire 230 et mettant en oeuvre le procédé de traitement de gestion selon l'invention.

A l'initialisation, les instructions de code du programme d'ordinateur $Pg_2$ 220 sont par exemple chargées dans une mémoire RAM avant d'être exécutées par le processeur de l'unité de traitement 210. Le processeur P2 de l'unité de traitement 210 met en oeuvre les étapes du procédé de gestion décrit précédemment, selon les instructions du programme d'ordinateur 220.

Selon l'invention, le dispositif de gestion 200 comprend une unité DET de détection d'une quantité d'énergie reçue dans une fenêtre de contention comprenant plusieurs intervalles, une unité MARK de marquage des intervalles de temps de la fenêtre de contention dans lesquels une quantité d'énergie supérieure à un seuil d'énergie prédéterminé a été détectée, à l'issue de la fenêtre de contention, une unité COD de codage d'une information représentative d'une combinaison ordonnée des intervalles marqués et une unité SEND d'émission d'un signal de réponse à destination de la pluralité de capteurs, ledit signal étant porteur de ladite information codée.

Ces unités sont pilotées par le processeur P2 de l'unité de traitement 210.

L'unité DET est agencée pour coopérer avec un module d'émission/réception radio RADIO $RX_{CO}$ apte à détecter la quantité d'énergie reçue pendant un intervalle de temps donné. L'unité SEND est elle aussi agencée pour coopérer avec le module RADIO $RX_{CO}$ apte à émettre le signal de réponse à la pluralité de capteurs, sur commande de l'unité SEND.

De façon avantageuse, les intervalles marqués sont stockés sous forme d'un tableau de marquage dans une mémoire, par exemple la mémoire 130 du dispositif de gestion selon l'invention.

Selon un mode de réalisation de l'invention, le dispositif 200 est intégré dans un noeud concentrateur CO.

Selon un autre mode de réalisation de l'invention, le dispositif de gestion 200 est intégré dans un module indépendant, connecté au noeud concentrateur.

On constate que les procédé décrits ci-dessus permettent à un noeud concentrateur d'autoriser plusieurs noeuds capteurs Ni à transmettre pendant une période de transmission comprenant plusieurs canaux de transmission.

Ainsi, même si la durée de transmission nécessitée par un noeud est plus faible que la durée de la période de transmission, la bande passante disponible peut être utilisée par d'autres noeuds. Par ailleurs, le mécanisme d'évitement des collisions en deux parties permet au noeud concentrateur une sélection efficace des noeuds autorisés à transmettre.

Du fait qu'il répond à tous les noeuds Ni participant à la compétition en diffusant un seul message de réponse très court, l'occupation de bande passante sur le canal de transmission est minimale.

## Revendications

1. Procédé de communication de données exécuté par un noeud capteur d'un réseau de télécommunications comprenant une pluralité de noeuds capteurs et un noeud concentrateur, ledit noeud capteur étant apte à transmettre des données au noeud concentrateur sur un médium de communication à diffusion qu'il partage avec la pluralité de noeuds capteurs, **caractérisé en ce que** le procédé comprend les étapes suivantes, destinées à être mises en oeuvre lorsque le noeud capteur a des données à transmettre au noeud concentrateur :

   - sélection (41) d'un intervalle de temps j dans une fenêtre de contention comprenant plusieurs intervalles de temps et précédant une période de transmission comprenant une pluralité d'intervalles de transmission ;
   - diffusion (43) d'un signal de requête dans l'intervalle de temps j sélectionné;
   - réception (46) d'un signal de réponse comprenant une information codée représentative d'une combinaison ordonnée des intervalles de la fenêtre de contention marqués comme des intervalles pendant lesquels au moins un signal a été reçu par le noeud concentrateur s;
   - détermination (47) d'un rang de transmission (Rg), au moins en fonction d'un nombre d'intervalles marqués par le noeud concentrateur parmi les intervalles de temps précédant l'intervalle de temps j à partir de l'information codée reçue ;
   - décision (48) d'émettre les données dans la période de transmission, lorsque le rang de transmission déterminé est inférieur ou égal au nombre d'intervalles de ladite période.

2. Procédé de communication selon la revendication **1, caractérisé en ce que** l'étape de détermination comprend une sous-étape de décomposition de l'information codée reçue en K composantes d'un vecteur d'une base orthogonale M-aire, avec M entier supérieur ou égal à 2, de dimension K, avec K entier non nul, égale au nombre d'intervalles de la fenêtre de contention et une sous-étape d'interprétation des K composantes obtenues, selon laquelle le $k^{ième}$ intervalle est interprété comme marqué, lorsque la $k^{ième}$ composante a une valeur supérieure à zéro.

3. Procédé de communication selon la revendication **2, caractérisé en ce que**, si M a une valeur égale à 2, l'intervalle est interprété comme marqué, lorsque la $k^{ième}$ composante a une valeur égale à 1.

4. Procédé de communication selon la revendication **2, caractérisé en ce que**, si M a une valeur strictement supérieure à deux, le signal de requête diffusé par le noeud capteur est porté par une $m^{ième}$ forme d'onde prédéterminée parmi M formes d'ondes prédéterminées et **en ce que** le rang de transmission est en outre déterminé en fonction d'un nombre de formes d'ondes reçues sur un intervalle de temps donné.

5. Procédé de communication selon la revendication **1, caractérisé en ce qu'**il comprend une étape préalable de réception d'un signal d'annonce de fenêtre de contention en provenance du noeud concentrateur.

6. Procédé de gestion de communication dans un réseau comprenant un noeud concentrateur et une pluralité de noeuds capteurs, la pluralité de noeuds capteurs étant apte à transmettre des données au noeud concentrateur sur un médium de communication à diffusion qu'ils partagent, ledit procédé étant exécuté par le noeud concentrateur, **caractérisé en ce qu'**il comprend les étapes suivantes :

   - écoute (52) du médium de communication en vue de détecter au moins un signal reçu dans une fenêtre de contention comprenant plusieurs intervalles;
   - marquage (54) des intervalles de temps de la fenêtre de contention dans lesquels au moins un signal reçu a été détecté ;
   - à l'issue de la fenêtre de contention, codage (57) d'une information représentative d'une combinaison ordonnée des intervalles marqués ;
   - Diffusion (58) d'un signal de réponse (SR), comprenant ladite information codée.

7. Procédé de gestion selon la revendication **6, caractérisé en ce que** l'information codée est obtenue par décomposition sur une base orthogonale M-aire de dimension K égale au nombre d'intervalles de la fenêtre de contention, la $k^{\text{ème}}$ composante étant mise à une valeur supérieure ou égale à 1, lorsque le $k^{\text{ème}}$ intervalle est marqué et à zéro sinon.

8. Procédé de gestion selon la revendication **7, caractérisé en ce que**, lorsque M a une valeur égale à 2, la $k^{\text{ème}}$ composante est mise à la valeur à 1, lorsque le $k^{\text{ième}}$ intervalle est marqué et à zéro sinon.

9. Procédé de gestion selon la revendication **7, caractérisé en ce que**, lorsque M a une valeur strictement supérieure à 2, l'étape d'écoute comprend la détection d'au moins un signal porté par une $m^{\text{ème}}$ forme d'onde parmi une pluralité de M formes d'ondes prédéterminées et **en ce que**, dans l'étape de codage de l'information, la valeur de la $k^{\text{ème}}$ composante est obtenue par combinaison ordonnée de M sous-composantes d'une base orthogonale, la $m^{\text{ème}}$ sous-composante étant égale à 1, lorsque la $m^{\text{ième}}$ forme d'onde a été détectée.

10. Dispositif de communication de données par un noeud capteur d'un réseau de télécommunications comprenant une pluralité de noeuds capteurs et un noeud concentrateur, ledit noeud capteur étant apte à transmettre des données au noeud concentrateur sur un médium de communication à diffusion qu'il partage avec la pluralité de noeuds capteurs, **caractérisé en ce que** le dispositif est apte à mettre en oeuvre les unités suivantes, lorsque le noeud capteur a des données à transmettre au noeud concentrateur :

   - sélection (SEL) d'un intervalle de temps j dans une fenêtre de contention comprenant plusieurs intervalles de temps et précédant une période de transmission comprenant une pluralité d'intervalles de transmission ;
   - diffusion d'un signal de requête dans l'intervalle de temps j sélectionné;
   - réception (BROAD) d'un signal de réponse comprenant une information codée représentative d'une combinaison ordonnée des intervalles de la fenêtre de contention marqués comme des intervalles pendant lesquels au moins un signal a été reçu par le noeud concentrateur s;
   - détermination (DET) d'un rang de transmission au moins en fonction d'un nombre d'intervalles marqués par le noeud concentrateur parmi les intervalles de temps précédant l'intervalle de temps j à partir de l'information codée reçue ;
   - décision (DEC) d'émettre les données dans la période de transmission, lorsque le rang de transmission déterminé est inférieur ou égal au nombre d'intervalles de la période de transmission.

11. Dispositif de gestion de communication dans un réseau comprenant un noeud concentrateur et une pluralité de noeuds capteurs, la pluralité de noeuds capteurs étant apte à transmettre des données au noeud concentrateur sur un medium de communication à diffusion qu'ils partagent, ledit dispositif étant apte à mettre en oeuvre les unités suivantes :

   - écoute (LIST) du médium de communication en vue de détecter au moins un signal reçu dans une fenêtre de contention comprenant plusieurs intervalles;
   - marquage (MARK) des intervalles de temps de la fenêtre de contention dans lesquels au moins un signal reçu a été détecté ;

- à l'issue de la fenêtre de contention, codage (COD) d'une information représentative d'une combinaison ordonnée des intervalles marqués ;
- Diffusion (BROAD) d'un signal de réponse, comprenant ladite information codée.

12. Noeud capteur d'un réseau de communication, comprenant une pluralité de noeuds capteurs et un noeud concentrateur, ledit noeud étant apte à communiquer avec le noeud concentrateur, **caractérisé en ce qu'**il comprend un dispositif de communication selon la revendication **10.**

13. Noeud concentrateur d'un réseau de communication comprenant une pluralité de noeuds capteurs et ledit noeud concentrateur, ledit noeud concentrateur étant apte à communiquer avec la pluralité de noeuds capteurs, **caractérisé en ce qu'**il comprend un dispositif de gestion de communications selon la revendication **11.**

14. Réseau de communication **caractérisé en ce qu'**il comprend une pluralité de noeuds capteurs conformes à la revendication **9** et un noeud concentrateur conforme à la revendication **10.**

15. Programme d'ordinateur (Pg1) comprenant des instructions pour la mise en oeuvre des étapes du procédé de communication selon l'une des revendications **1 à 5,** lorsqu'il est exécuté par un processeur.

16. Programme d'ordinateur (Pg2) comprenant des instructions pour la mise en oeuvre des étapes du procédé de gestion selon l'une des revendications **6 à 9,** lorsqu'il est exécuté par un processeur.

**Patentansprüche**

1. Datenkommunikationsverfahren, das durch einen Sensorknoten eines Telekommunikationsnetzes, das mehrere Sensorknoten und einen Verteilerknoten umfasst, ausgeführt wird, wobei der Sensorknoten ausgelegt ist, über ein Kommunikationsmedium zur Übertragung, das er mit den mehreren Sensorknoten gemeinsam nutzt, Daten an den Verteilerknoten zu übertragen, **dadurch gekennzeichnet, dass** das Verfahren die folgenden Schritte umfasst, die bestimmt sind, ausgeführt zu werden, wenn der Sensorknoten Daten zum Übertragen an den Verteilerknoten aufweist:

- Auswahl (41) eines Zeitintervalls j in einem Zugriffsfenster, das mehrere Zeitintervalle umfasst und einer Übertragungsperiode vorangeht, die mehrere Übertragungsintervalle umfasst;
- Übertragung (43) eines Anforderungssignals in dem ausgewählten Zeitintervall j;
- Empfang (46) eines Antwortsignals, das codierte Informationen umfasst, die eine geordnete Kombination der Intervalle des Zugriffsfensters darstellen, die als die Intervalle markiert sind, während denen mindestens ein Signal durch den Verteilerknoten s empfangen wurde;
- Bestimmung (47) eines Übertragungsrangs (Rg) mindestens entsprechend einer Anzahl von Intervallen, die durch den Verteilerknoten markiert sind, aus den Zeitintervallen, die dem Zeitintervall j ab den empfangenen, codierten Informationen vorangehen;
- Entscheidung (48), die Daten in der Übertragungsperiode zu senden, wenn der bestimmte Übertragungsrang kleiner oder gleich der Anzahl von Intervallen der Periode ist.

2. Kommunikationsverfahren nach Anspruch 1, **dadurch gekennzeichnet, dass** der Schritt der Bestimmung einen Teilschritt des Zerlegens der empfangenen, codierten Informationen in K Komponenten eines Vektors einer orthogonalen M-Bereichs-Basis, wobei M größer oder gleich 2 ist, der Dimension K, wobei K ungleich Null, gleich der Anzahl der Intervalle des Zugriffsfensters ist, und einen Teilschritt der Auswertung der K erhaltenen Komponenten, in dem das k-te Intervall als markiert interpretiert wird, wenn die k-te Komponente einen Wert größer als Null aufweist, umfasst.

3. Kommunikationsverfahren nach Anspruch 2, **dadurch gekennzeichnet, dass** dann, wenn M einen Wert gleich 2 aufweist, das Intervall als markiert interpretiert wird, wenn die k-te Komponente einen Wert gleich 1 aufweist.

4. Kommunikationsverfahren nach Anspruch 2, **dadurch gekennzeichnet, dass** dann, wenn M einen Wert aufweist, der streng größer als 2 ist, das Anforderungssignal, das durch den Sensorknoten übertragen wird, durch eine vorgegebene m-te Wellenform aus M vorgegebenen Wellenformen geführt wird und dass der Übertragungsrang außerdem entsprechend einer Anzahl der Wellenformen bestimmt wird, die in einem gegebenen Zeitintervall empfangen werden.

5. Kommunikationsverfahren nach Anspruch 1, **dadurch gekennzeichnet, dass** es einen Schritt umfasst, der dem Empfang eines Ankündigungssignals für das Zugriffsfensters vom Verteilerknoten vorangeht.

6. Kommunikationsverwaltungsverfahren in einem Netz, das einen Verteilerknoten und mehrere Sensorknoten umfasst, wobei die mehreren Sensorknoten ausgelegt sind, über ein Kommunikationsmedium zur Übertragung, das sie gemeinsam nutzen, Daten an den Verteilerknoten zu übertragen, wobei das Verfahren durch den Verteilerknoten ausgeführt wird, **dadurch gekennzeichnet, dass** es die folgenden Schritte umfasst:

   - Abtastung (52) des Kommunikationsmediums im Hinblick auf das Detektieren mindestens eines Signals, das in einem Zugriffsfenster empfangen wird, das mehrere Intervalle umfasst;
   - Markierung (54) der Zeitintervalle des Zugriffsfensters, in denen mindestens ein empfangenes Signal detektiert wurde;
   - am Ende des Zugriffsfensters Codierung (57) von Informationen, die eine geordnete Kombination der markierten Intervalle darstellen;
   - Übertragung (58) eines Antwortsignals (SR), das die codierten Informationen umfasst.

7. Verwaltungsverfahren nach Anspruch 6, **dadurch gekennzeichnet, dass** die codierten Informationen durch das Aufgliedern auf eine orthogonale M-Bereichs-Basis der Dimension K, die gleich der Anzahl der Intervalle im Zugriffsfenster ist, erhalten werden, wobei die k-te Komponente auf einen Wert größer oder gleich 1 gesetzt wird, wenn das k-te Intervall markiert ist, und andernfalls auf null gesetzt wird.

8. Verwaltungsverfahren nach Anspruch 7, **dadurch gekennzeichnet, dass** dann, wenn M einen Wert gleich 2 aufweist, die k-te Komponente auf den Wert 1 gesetzt wird, wenn das k-te Intervall markiert ist, und andernfalls auf null gesetzt wird.

9. Verwaltungsverfahren nach Anspruch 7, **dadurch gekennzeichnet, dass** dann, wenn M einen Wert aufweist, der streng größer als 2 ist, der Schritt des Abtastens die Bestimmung mindestens eines Signals, das von einer m-ten Wellenform aus einer Menge von M vorgegebenen Wellenformen getragen wird, umfasst und dass in dem Schritt des Codierens der Informationen der Wert der k-ten Komponente durch das geordnete Kombinieren der M Teilkomponenten einer orthogonalen Basis erhalten wird, wobei die m-te Teilkomponente gleich 1 ist, wenn die m-te Wellenform detektiert wurde.

10. Datenkommunikationsvorrichtung für einen Sensorknoten eines Telekommunikationsnetzes, das mehrere Sensorknoten und einen Verteilerknoten umfasst, wobei der Sensorknoten ausgelegt ist, über ein Kommunikationsmedium zur Übertragung, das er mit den mehreren Sensorknoten gemeinsam benutzt, Daten an den Verteilerknoten zu übertragen, **dadurch gekennzeichnet, dass** die Vorrichtung ausgelegt ist, die folgenden Einheiten auszuführen, wenn der Sensorknoten Daten zum Übertragen an den Verteilerknoten aufweist:

   - Auswahl (SEL) eines Zeitintervalls j in einem Zugriffsfenster, das mehrere Zeitintervalle umfasst und einer Übertragungsperiode vorangeht, die mehrere Übertragungsintervalle umfasst;
   - Übertragung eines Anforderungssignals in dem ausgewählten Zeitintervall j;
   - Empfang (BROAD) eines Antwortsignals, das codierte Informationen umfasst, die eine geordnete Kombination der Intervalle des Zugriffsfensters darstellen, die als die Intervalle markiert sind, während denen mindestens ein Signal durch den Verteilerknoten s empfangen wurde;
   - Bestimmung (DET) eines Übertragungsrangs mindestens entsprechend einer Anzahl von Intervallen, die durch den Verteilerknoten markiert sind, aus den Zeitintervallen, die dem Zeitintervall j ab den empfangenen, codierten Informationen vorangehen;
   - Entscheidung (DEC), die Daten in der Übertragungsperiode zu senden, wenn der bestimmte Übertragungsrang kleiner oder gleich der Anzahl von Intervallen der Übertragungsperiode ist.

11. Kommunikationsverwaltungsvorrichtung in einem Netz, das einen Verteilerknoten und mehrere Sensorknoten umfasst, wobei die mehreren Sensorknoten ausgelegt sind, über ein Kommunikationsmedium zur Übertragung, das sie gemeinsam nutzen, Daten an den Verteilerknoten zu übertragen, wobei die Vorrichtung ausgelegt ist, die folgenden Einheiten auszuführen:

   - Abtasten (LIST) des Kommunikationsmediums im Hinblick auf das Detektieren mindestens eines Signals, das in einem Zugriffsfenster empfangen wird, das mehrere Intervalle umfasst;
- Markierung (MARK) der Zeitintervalle des Zugriffsfensters, in denen mindestens ein empfangenes Signal detektiert wurde;
- am Ende des Zugriffsfensters Codierung (COD) von Informationen, die eine geordnete Kombination der markierten Intervalle darstellen;
- Übertragung (BROAD) eines Antwortsignals (SR), das die codierten Informationen umfasst.

12. Sensorknoten in einem Kommunikationsnetz, das mehrere Sensorknoten und einen Verteilerknoten umfasst, wobei der Knoten ausgelegt ist, mit dem Verteilerknoten zu kommunizieren, **dadurch gekennzeichnet, dass** er eine Kommunikationsvorrichtung nach Anspruch 10 umfasst.

13. Verteilerknoten eines Kommunikationsnetzes, das mehrere Sensorknoten und den Verteilerknoten umfasst, wobei der Verteilerknoten ausgelegt ist, mit den mehreren Sensorknoten zu kommunizieren, **dadurch gekennzeichnet, dass** er eine Kommunikationsverwaltungsvorrichtung nach Anspruch 11 umfasst.

14. Kommunikationsnetz, **dadurch gekennzeichnet, dass** es mehrere Sensorknoten nach Anspruch 9 und einen Verteilerknoten nach Anspruch 10 umfasst.

15. Computerprogramm (Pg1), das Anweisungen zum Ausführen der Schritte des Kommunikationsverfahrens nach einem der Ansprüche 1 bis 5, wenn es durch einen Prozessor ausgeführt wird, umfasst.

16. Computerprogramm (Pg2), das Anweisungen zum Ausführen der Schritte des Verwaltungsverfahrens nach einem der Ansprüche 6 bis 9, wenn es durch einen Prozessor ausgeführt wird, umfasst.

**Claims**

1. Data communication method executed by a sensor node of a telecommunications network comprising a plurality of sensor nodes and a concentrator node, said sensor node being able to transmit data to the concentrator node on a broadcasting communication medium that it shares with the plurality of sensor nodes, **characterized in that** the method comprises the following steps, intended to be implemented when the sensor node has data to be transmitted to the concentrator node:

   - selection (41) of a time interval j in a contention window comprising several time intervals and preceding a transmission period comprising a plurality of transmission intervals;
   - broadcasting (43) of a request signal in the time interval j selected;
   - reception (46) of a response signal comprising a coded information item representative of an ordered combination of the intervals of the contention window that are marked as intervals during which at least one signal has been received by the concentrator node s;
   - determination (47) of a transmission rank (Rg), at least as a function of a number of intervals marked by the concentrator node from among the time intervals preceding the time interval j on the basis of the coded information item received;
   - decision (48) to send the data in the transmission period, when the transmission rank determined is less than or equal to the number of intervals of said period.

2. Communication method according to Claim 1, **characterized in that** the determination step comprises a sub-step of decomposing the coded information item received into K components of a vector of an M-ary orthogonal base, with M an integer greater than or equal to 2, of dimension K, with K a non-zero integer, equal to the number of intervals of the contention window and a sub-step of interpreting the K components obtained, according to which the $k^{th}$ interval is interpreted as marked, when the $k^{th}$ component has a value greater than zero.

3. Communication method according to Claim 2, **characterized in that**, if M has a value equal to 2, the interval is interpreted as marked, when the $k^{th}$ component has a value equal to 1.

4. Communication method according to Claim 2, **characterized in that**, if M has a value strictly greater than two, the request signal broadcast by the sensor node is carried by a predetermined $m^{th}$ waveform from among M predetermined waveforms and **in that** the transmission rank is furthermore determined as a function of a number of waveforms received over a given time interval.

5. Communication method according to Claim 1, **characterized in that** it comprises a prior step of receiving a contention window advertisement signal originating from the concentrator node.

6. Communication management method in a network comprising a concentrator node and a plurality of sensor nodes, the plurality of sensor nodes being able to transmit data to the concentrator node on a broadcasting communication medium that they share, said method being executed by the concentrator node, **characterized in that** it comprises the following steps:

   - listening (52) to the communication medium with a view to detecting at least one signal received in a contention window comprising several intervals;
   - marking (54) of the contention window time intervals in which at least one received signal has been detected;
   - on completion of the contention window, coding (57) of an information item representative of an ordered combination of the marked intervals;
   - broadcasting (58) of a response signal (RS), comprising said coded information item.

7. Management method according to Claim 6, **characterized in that** the coded information item is obtained by decomposition over an M-ary orthogonal base of dimension K equal to the number of intervals of the contention window, the $k^{th}$ component being set to a value greater than or equal to 1, when the $k^{th}$ interval is marked and to zero otherwise.

8. Management method according to Claim 7, **characterized in that**, when M has a value equal to 2, the $k^{th}$ component is set to the value 1, when the $k^{th}$ interval is marked and to zero otherwise.

9. Management method according to Claim 7, **characterized in that**, when M has a value strictly greater than 2, the listening step comprises the detection of at least one signal carried by an $m^{th}$ waveform from among a plurality of M predetermined waveforms and **in that**, in the step of coding the information item, the value of the $k^{th}$ component is obtained by ordered combination of M sub-components of an orthogonal base, the $m^{th}$ sub-component being equal to 1, when the $m^{th}$ waveform has been detected.

10. Device for data communication by a sensor node of a telecommunications network comprising a plurality of sensor nodes and a concentrator node, said sensor node being able to transmit data to the concentrator node on a broadcasting communication medium that it shares with the plurality of sensor nodes, **characterized in that** the device is able to implement the following units, when the sensor node has data to be transmitted to the concentrator node:

    - selection (SEL) of a time interval j in a contention window comprising several time intervals and preceding a transmission period comprising a plurality of transmission intervals;
    - broadcasting of a request signal in the time interval j selected;
    - reception (BROAD) of a response signal comprising a coded information item representative of an ordered combination of the intervals of the contention window that are marked as intervals during which at least one signal has been received by the concentrator node s;
    - determination (DET) of a transmission rank at least as a function of a number of intervals marked by the concentrator node from among the time intervals preceding the time interval j on the basis of the coded information item received;
    - decision (DEC) to send the data in the transmission period, when the transmission rank determined is less than or equal to the number of intervals of the transmission period.

11. Communication management device in a network comprising a concentrator node and a plurality of sensor nodes, the plurality of sensor nodes being able to transmit data to the concentrator node on a broadcasting communication medium that they share, said device being able to implement the following units:

    - listening (LIST) to the communication medium with a view to detecting at least one signal received in a contention window comprising several intervals;
    - marking (MARK) of the contention window time intervals in which at least one received signal has been detected;
    - on completion of the contention window, coding (COD) of an information item representative of an ordered combination of the marked intervals;
    - broadcasting (BROAD) of a response signal, comprising said coded information item.

12. Sensor node of a communication network, comprising a plurality of sensor nodes and a concentrator node, said node being able to communicate with the concentrator node, **characterized in that** it comprises a communication device according to Claim 10.

13. Concentrator node of a communication network comprising a plurality of sensor nodes and said concentrator node, said concentrator node being able to communicate with the plurality of sensor nodes, **characterized in that** it comprises a device for managing communications according to Claim 11.

14. Communication network **characterized in that** it comprises a plurality of sensor nodes in accordance with Claim 9 and a concentrator node in accordance with Claim 10.

15. Computer program (Pg1) comprising instructions for the implementation of the steps of the communication method according to one of Claims 1 to 5, when it is executed by a processor.

16. Computer program (Pg2) comprising instructions for the implementation of the steps of the management method according to one of Claims 6 to 9, when it is executed by a processor.

**FIG. 1**

**FIG. 2**

**FIG. 3**

| k | 0 | 1 | 2 | 3 | 4 | 5 | 6 |
|---|---|---|---|---|---|---|---|
| Ck | x | 0 | 0 | x | 0 | x | 0 |

FIG. 6

| m\k | 0 | 1 | 2 | 3 | 4 | 5 | 6 |
|---|---|---|---|---|---|---|---|
| 0 | | x | | | | x | |
| Fo1 | x | | x | x | | | x |
| Fo2 | | | x | | x | | |

FIG. 7

40 GET t0

41 SEL j

42 S

43 BROAD REQ in j

44 S

45 RADIO RX

46 REC ANSW ?

47 DET IM

48 DEC

49 S

A

**FIG. 4**

**FIG. 5**

**FIG. 8**

**FIG. 9**

## RÉFÉRENCES CITÉES DANS LA DESCRIPTION

**Documents brevets cités dans la description**

- WO 2012001266 A

**Littérature non-brevet citée dans la description**

- Sift : A MAC protocol for event-driven wireless sensor networks. **K. JAMIESON ; H. BALAKRISHNAN ; Y.C. TAY.** Lecture Notes in Computer Science. Springer, 2006, vol. 3868, 260-275